# EUROPÄISCHE PATENTSCHRIFT

(11) **EP 3 023 584 B1**
(45) Veröffentlichungstag und Bekanntmachung des Hinweises auf die Patenterteilung: **17.07.2019**
(21) Anmeldenummer: 14194517.0
(22) Anmeldetag: 24.11.2014
(51) Int. Cl.: F01D 5/10, F01D 5/16, F04D 29/66, F01D 5/26, F01D 9/02

(54) **SCHAUFEL FÜR EINE TURBOMASCHINE UND AXIALTURBOMASCHINE**
BLADE FOR A TURBO ENGINE AND AXIAL TURBOMACHINE
AUBE DE TURBOMACHINE ET TURBOMACHINE AXIALE

(43) Veröffentlichungstag der Anmeldung: 25.05.2016
(73) Patentinhaber: MTU Aero Engines AG, 80995 München (DE)
(72) Erfinder: Hartung, Andreas, 81829 München (DE); Klingels, Hermann, 85221 Dachau (DE); Wackers, Patrick, 80999 München (DE); Feldmann, Manfred, 82223 Eichenau (DE); Stiehler, Frank, 04924 Bad Liebenwerda (DE); Schlemmer, Markus, 84048 Mainburg / Wambach (DE)

(56) Entgegenhaltungen:
- WO-A1-2012/095067
- US-A- 2 349 187

## Beschreibung

Die vorliegende Erfindung betrifft eine Schaufel für eine Turbomaschine sowie eine Axialturbomaschine.

Aus der WO 2012/095067 A1 ist eine Turbomaschinenschaufel mit Stimm- bzw. Impulskörpern bekannt, die Resonanzen der Schaufel im Wesentlichen nicht dissipativ durch Reibung, sondern durch Verstimmung der Eigenfrequenzen mittels impulsartigen Stoßkontakten reduzieren. Die Impulskörper liegen dabei in zylinderförmigen Teilgehäusen, welche entlang einer Achse hintereinander und jeweils durch eine Zwischenwand voneinander getrennt zu einem Stimmkörper zusammengesetzt sind. Der zylinderförmige Stimmkörper ist dabei zwischen zwei benachbarten Schaufeln, unterhalb ihrer Plattformen angeordnet.

Eine Aufgabe einer Ausführung der vorliegenden Erfindung ist es, eine Turbomaschine, insbesondere eine Axialturbomaschine, zu verbessern.

Diese Aufgabe wird durch eine Schaufel für eine Turbomaschine mit den Merkmalen des Anspruchs 1 und/oder eine Axialturbomaschine mit den Merkmalen des Anspruchs 9 gelöst. Vorteilhafte Ausführungsformen der Erfindung sind Gegenstand der Unteransprüche.

Nach einer Ausführung der vorliegenden Erfindung weist eine Schaufel für eine Turbomaschine, insbesondere wenigstens eine Schaufel einer Turbomaschine, ein oder mehrere Impulskörpergehäuse mit jeweils einer ersten Stoßkammer auf, in der jeweils wenigstens ein, insbesondere genau ein, Impulskörper mit Bewegungsspiel angeordnet ist.

Die Schaufel ist in einer Ausführung eine rotorfeste Laufschaufel oder eine gehäusefeste Leitschaufel. Die Turbomaschine ist in einer Ausführung ein Verdichter oder eine Turbine einer Gasturbine, insbesondere einer Flugtriebwerkgasturbine.

Nach einem ersten Aspekt weisen ein oder mehrere Impulskörpergehäuse eine oder mehrere, insbesondere wenigstens drei, zweite Stoßkammern auf, die mit der ersten Stoßkammer in einer ersten Matrixrichtung fluchten und in denen jeweils wenigstens ein, insbesondere genau ein, Impulskörper mit Bewegungsspiel angeordnet ist. Zusätzlich weisen eines oder mehrere dieser Impulskörpergehäuse jeweils eine oder mehrere dritte Stoßkammern auf, die mit der ersten Stoßkammer in einer zweiten Matrixrichtung quer zur ersten Matrixrichtung fluchten und in denen jeweils wenigstens ein, insbesondere genau ein, Impulskörper mit Bewegungsspiel angeordnet ist. Die erste und zweite Matrixrichtung schließen in einer Ausführung einen Winkel von wenigstens 30° und höchstens 150°, insbesondere einen Winkel zwischen 85° und 95°, miteinander ein.

In einer Weiterbildung weisen eines oder mehrere dieser Impulskörpergehäuse jeweils eine oder mehrere vierte Stoßkammern auf, die von der ersten Stoßkammer in der ersten und zweiten Matrixrichtung beabstandet sind, insbesondere mit einer zweiten Stoßkammer in der zweiten Matrixrichtung und/oder einer dritten Stoßkammer in der ersten Matrixrichtung fluchten und/oder in einer Ebene mit der ersten und einer zweiten und einer dritten Stoßkammer angeordnet sind, und in denen jeweils wenigstens ein, insbesondere genau ein, Impulskörper mit Bewegungsspiel angeordnet ist.

In einer Ausführung sind die erste Stoßkammer, eine oder mehrere, insbesondere alle, zweiten Stoßkammern, eine oder mehrere, insbesondere alle, dritten Stoßkammern und gegebenenfalls eine oder mehrere, insbesondere alle, vierten Stoßkammern in einer gemeinsamen Ebene angeordnet. Insbesondere können die erste und wenigstens eine zweite und wenigstens eine dritte und wenigstens eine vierte Stoßkammer matrix-, insbesondere äquidistant bzw. schachbrettartig, verteilt sein.

In einer Ausführung sind wenigstens eine dritte Stoßkammer und die erste Stoßkammer und/oder wenigstens eine zweite Stoßkammer und/oder wenigstens eine vierte Stoßkammer baugleich ausgebildet, weisen insbesondere dieselben Abmessungen auf und/oder sind aus dem gleichen Material hergestellt. Zusätzlich oder alternativ sind wenigstens eine dritte Stoßkammer und die erste Stoßkammer und/oder wenigstens eine zweite Stoßkammer und/oder wenigstens eine vierte Stoßkammer unterschiedlich ausgebildet, weisen insbesondere verschiedene Abmessungen auf und/oder sind aus unterschiedlichem Material hergestellt. Zusätzlich oder alternativ sind wenigstens ein in einer dritten Stoßkammer angeordneter Impulskörper und der in der ersten Stoßkammer angeordnete Impulskörper und/oder wenigstens ein in einer zweiten Stoßkammer angeordneter Impulskörper und/oder wenigstens ein in einer vierten Stoßkammer angeordneter Impulskörper baugleich ausgebildet, weisen insbesondere dieselben Abmessungen auf und/oder sind aus dem gleichen Material hergestellt. Zusätzlich oder alternativ sind wenigstens ein in einer dritten Stoßkammer angeordneter Impulskörper und der in der ersten Stoßkammer angeordnete Impulskörper und/oder wenigstens ein in einer zweiten Stoßkammer angeordneter Impulskörper und/oder wenigstens ein in einer vierten Stoßkammer angeordneter Impulskörper unterschiedlich ausgebildet, weisen insbesondere verschiedene Abmessungen auf und/oder sind aus unterschiedlichem Material hergestellt.

Es hat sich überraschend gezeigt, dass durch einen solchen Versatz von wenigstens drei Stoßkammern mit Impulskörpern in wenigstens zwei Richtungen Resonanzen der Schaufel besonders vorteilhaft reduziert werden können.

Nach einem zweiten Aspekt, der mit dem ersten Aspekt kombiniert oder eigenständig verwirklicht sein kann, weisen eine oder mehrere Stoßkammern eines oder mehrerer Impulskörpergehäuse jeweils in wenigstens einer ersten und einer zweiten Stoßrichtung, in denen der jeweilige Impulskörper Bewegungsspiel aufweist und die miteinander einen Winkel von wenigstens 30° und höchstens 150°, insbesondere einen Winkel zwischen 85° und 95°, und mit einer zur Rotationsachse der Turbomaschine senkrechten Längsachse der Schaufel bzw. der radialen Richtung der Turbomaschine jeweils einen Winkel von wenigstens 75° und höchstens 105°, insbesondere einen Winkel zwischen 85° und 95°, einschließen, jeweils einander gegenüberliegende Wandungen auf, wobei ein Abstand zwischen den in der ersten Stoßrichtung einander gegenüberliegende Wandungen und ein Abstand zwischen den in der zweiten Stoßrichtung einander gegenüberliegende Wandungen um höchstens 10%, insbesondere um höchstens 5% voneinander differieren, insbesondere gleich sind.

Weist beispielsweise eine Stoßkammer einen quadratischen Querschnitt senkrecht zur Längsachse auf, so sind die Abstände in den beiden Stoßrichtungen parallel zu Seitenwänden des quadratischen Querschnitts, die miteinander und mit der Längsachse jeweils einen Winkel von 90° einschließen, gleich. Weist eine Stoßkammer beispielsweise einen kreisförmigen Querschnitt senkrecht zur Längsachse auf, so sind die Abstände in allen Stoßrichtungen, die mit der Längsachse einen Winkel von 90° einschließen, gleich.

Es hat sich überraschend gezeigt, dass durch solche, wenigstens im Wesentlichen, gleichen Abstände einander gegenüberliegender Wandungen von Stoßkammern in wenigstens zwei Stoßrichtungen, in denen der jeweilige Impulskörper Bewegungsspiel aufweist, Resonanzen der Schaufel besonders vorteilhaft reduziert werden können, insbesondere, sofern diese Stoßrichtungen, wenigstens im Wesentlichen, senkrecht zur Längsachse sind. Das Bewegungsspiel in wenigstens einer Stoßrichtung beträgt in einer Ausführung wenigstens 0,01 mm, insbesondere wenigstens 0,1 mm, und/oder höchstens 1,5 mm, insbesondere höchstens 1,2 mm, noch weiter bevorzugt höchstens 0,6 mm.

Nach einem dritten Aspekt der vorliegenden Erfindung, der mit dem ersten und/oder zweiten Aspekt kombiniert oder eigenständig verwirklicht sein kann, weist eine Axialturbomaschine, insbesondere ein Verdichter oder eine Turbine einer Gasturbine, insbesondere einer Flugtriebwerkgasturbine, eine in Durchströmungsrichtung vorderste Schaufelgitteranordnung bzw. eine in Durchströmungsrichtung vorderste Stufe mit einem Leit- und/oder mit einem Laufgitter, eine in Durchströmungsrichtung hinterste Schaufelgitteranordnung bzw. eine in Durchströmungsrichtung hinterste Stufe mit einem Leit- und/oder mit einem Laufgitter und wenigstens eine weitere Schaufelgitteranordnung bzw. wenigstens eine weitere Stufe mit einem Leit- und/oder mit einem Laufgitter auf, die in Durchströmungsrichtung zwischen der vordersten und der hintersten Schaufelgitteranordnung angeordnet ist, wobei eine oder mehrere Leitschaufeln und/oder eine oder mehrere Laufschaufel der vordersten Schaufelgitteranordnung und eine oder mehrere Leitschaufeln und/oder eine oder mehrere Laufschaufel der hintersten Schaufelgitteranordnung jeweils ein oder mehrere Impulskörpergehäuse mit einer oder mehreren Stoßkammern aufweisen, in der jeweils wenigstens ein, insbesondere genau ein, Impulskörper mit Bewegungsspiel angeordnet ist. Eine oder mehrere, insbesondere alle, Leitschaufeln und/oder eine oder mehrere, insbesondere alle, Laufschaufel der weiteren Schaufelgitteranordnung weisen hingegen nach dem dritten Aspekt keine Stoßkammer auf, in der ein Impulskörper mit Bewegungsspiel angeordnet ist.

Es hat sich überraschend gezeigt, dass hierdurch vorteilhaft Interferenzen zwischen Impulskörpern in der vordersten Schaufelgitteranordnung und Impulskörpern in der hintersten Schaufelgitteranordnung reduziert werden können.

Wie vorstehend erläutert, können der erste, zweite und/oder dritte Aspekt miteinander kombiniert oder eigenständig verwirklicht sein. Die nachfolgenden Erläuterungen beziehen sich daher allgemein auf eine(n) oder mehrere der vorstehend erläuterten Aspekte bzw. Ausführungen.

In einer Weiterbildung schließt wenigstens eine Wandung einer Stoßkammer, insbesondere eine der vorstehend genannten, einander gegenüberliegenden Wandungen, mit der Längsachse der Schaufel einen Winkel von höchstens 15°, insbesondere höchstens 5°, ein. Durch eine solche, wenigstens im Wesentlichen, radiale Wandung können Resonanzen der Schaufel besonders vorteilhaft reduziert werden.

In einer Weiterbildung ist wenigstens eine Wandung einer Stoßkammer, insbesondere eine der vorstehend genannten, einander gegenüberliegenden Wandungen und/oder wenigstens eine Wandung, die mit der Längsachse der Schaufel einen Winkel von wenigstens 75° und/oder höchstens 105° einschließt, eben bzw. plan. Durch eine solche Wandung können besonders vorteilhafte Stoßkontakte induziert werden.

In einer Weiterbildung weist wenigstens eine der Stoßkammern einen kreisförmigen oder polygonalen, insbesondere vier-, fünf- oder sechseckigen, Querschnitt auf. In einer Ausführung weist eine solche Stoßkammer senkrecht zu diesem Querschnitt einen polygonalen, insbesondere vier-, fünf- oder sechseckigen, Querschnitt auf. Eine Stoßkammer kann also insbesondere kreiszylinderförmig ausgebildet sein, so dass sie einen kreisförmigen und senkrecht hierzu einen viereckigen Querschnitt aufweist.

In einer Weiterbildung weisen ein oder mehrere, insbesondere alle, Impulskörper jeweils eine Masse von wenigstens 0,01 g und/oder höchstens 0,075 g auf. Zusätzlich oder alternativ beträgt in einer Ausführung eine Dichte eines oder mehrerer, insbesondere aller, Impulskörper höchstens 80%, insbesondere höchstens 70%, einer Dichte eines Schaufelblatts der Schaufel, in der der jeweilige Impulskörper angeordnet ist. Es hat sich überraschend herausgestellt, dass durch diese Abstimmung der Dichten von Impulskörper und Schaufelblättern deren Resonanzen besonders vorteilhaft reduziert werden können. Mit "Dichte" kann in diesem Zusammenhang insbesondere die Dichte eines Grundmaterials des besagten Impulskörpers bzw. des besagten Schaufelblatts gemeint sein.

In einer Weiterbildung sind ein oder mehrere Impulskörpergehäuse separat, insbesondere mehrteilig, hergestellt und mit einem Grundkörper, insbesondere einem Schaufelfuß, einem Deckband oder einem Schaufelblatt, der jeweiligen Schaufel lösbar, insbesondere form- und/oder reibschlüssig, oder dauerhaft, insbesondere stoffschlüssig, verbunden. Hierdurch kann in einer Ausführung die Herstellung und/oder Abstimmung der Impulskörpergehäuse verbessert werden.

In einer Weiterbildung ist wenigstens eines der Impulskörpergehäuse in einer vorderkantennäheren Hälfte, insbesondere einem vorderkantennäheren Drittel, der jeweiligen Schaufel, insbesondere vollständig innerhalb eines Grundkörpers der Schaufel, angeordnet. Zusätzlich oder alternativ ist in einer Ausführung wenigstens eines der Impulskörpergehäuse in einer hinterkantennäheren Hälfte, insbesondere einem hinterkantennäheren Drittel, der jeweiligen Schaufel, insbesondere vollständig innerhalb eines Grundkörpers der Schaufel, angeordnet. Hierdurch können Resonanzen der Schaufel besonders vorteilhaft reduziert werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil einer Axialturbomaschine nach einer Ausführung der vorliegenden Erfindung in einem Meridianschnitt;
- Fig. 2: einen Meridianschnitt durch eine Schaufel nach einer Ausführung der vorliegenden Erfindung; und
- Fig. 3: einen Schnitt längs der Linie III-III in Fig. 2.

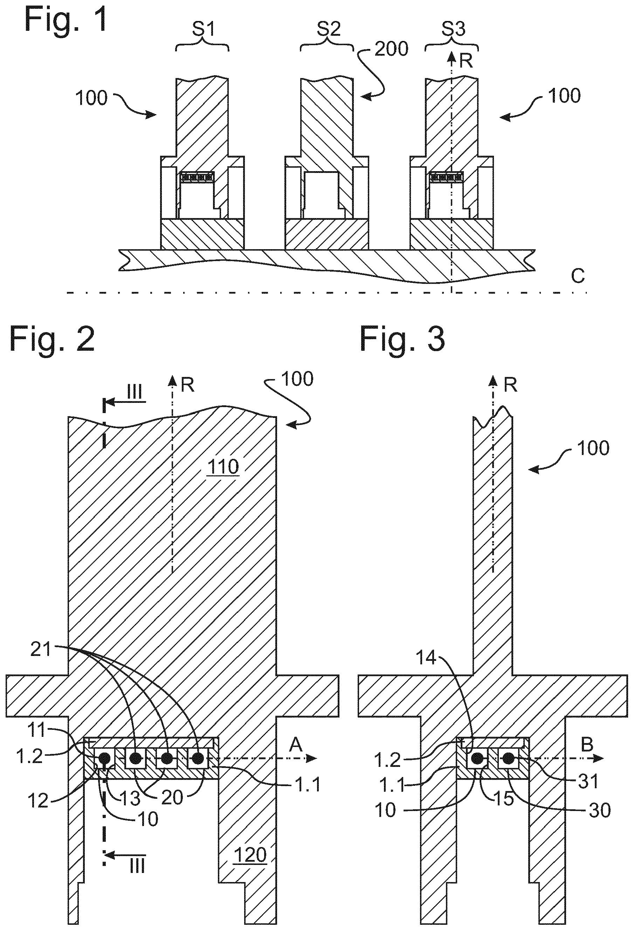

Fig. 2 zeigt einen Meridianschnitt durch eine Laufschaufel 100 eines Verdichters einer Gasturbine nach einer Ausführung der vorliegenden Erfindung, Fig. 3 einen hierzu senkrechten Schnitt längs der Linie III-III in Fig. 2. Die Erfindung wird nachfolgend am Beispiel von Laufschaufeln erläutert, in einer Abwandlung kann bzw. können stattdessen die Schaufel(n) auch (eine) Leitschaufel(n) sein.

Die Schaufel 100 weist ein zweiteiliges Impulskörpergehäuse 1.1, 1.2 mit einer ersten Stoßkammer 10 auf, in der ein Impulskörper 11 mit Bewegungsspiel angeordnet ist, der in den Figuren zur Verdeutlichung schwarz hervorgehoben ist.

Das Impulskörpergehäuse weist drei zweite Stoßkammern 20 auf (vgl. Fig. 2), die mit der ersten Stoßkammer 10 in einer ersten Matrixrichtung A fluchten und in denen jeweils ein Impulskörper 21 mit Bewegungsspiel angeordnet ist. Zusätzlich weist dieses Impulskörpergehäuse eine dritte Stoßkammer 30 auf (vgl. Fig. 3), die mit der ersten Stoßkammer 10 in einer zweiten Matrixrichtung B fluchtet und in der ein Impulskörper 31 mit Bewegungsspiel angeordnet ist. Die erste und zweite Matrixrichtung A, B schließen einen Winkel zwischen 85° und 95° miteinander ein.

Das Impulskörpergehäuse 1.1, 1.2 weist drei vierte Stoßkammern auf, die in den Schnitten der Fig. 2, 3 nicht sichtbar sind. Diese fluchten in der ersten Matrixrichtung A mit der dritten Stoßkammer 30 und in der zweiten Matrixrichtung B jeweils mit einer der zweiten Stoßkammern 20, so dass sie von der ersten Stoßkammer 10 sowohl in der ersten als auch der zweiten Matrixrichtung A, B beabstandet und in einer gemeinsamen Ebene angeordnet sind. Auch in den vierten Stoßkammern ist jeweils ein Impulskörper mit Bewegungsspiel angeordnet.

Im Ausführungsbeispiel sind die erste Stoßkammer 10, alle drei zweiten Stoßkammern 20, die dritte Stoßkammer 30 und alle drei vierten Stoßkammern äquidistant bzw. schachbrettartig verteilt sein. In einer Abwandlung können eine oder mehrere dieser Stoßkammern auch mit variierenden Abständen angeordnet sein. Zusätzlich oder alternativ können vierte Stoßkammern auch, insbesondere anstelle einer oder zweier der zweiten Stoßkammern 20, in der ersten und/oder zweiten Matrixrichtung außer Flucht mit der ersten und/oder anderen Stoßkammern angeordnet sein.

Im Ausführungsbeispiel sind alle Stoßkammer baugleich ausgebildet. In einer Abwandlung können eine oder mehrere der Stoßkammern auch unterschiedlich ausgebildet sein. Im Ausführungsbeispiel sind alle in den Stoßkammern angeordnete Impulskörper baugleich ausgebildet. In einer Abwandlung können eine oder mehrere der in den Stoßkammern angeordneten Impulskörper unterschiedlich ausgebildet sein.

Die Stoßkammern des Impulskörpergehäuses 1.1, 1.2 weisen in einer ersten Stoßrichtung A und einer zweiten Stoßrichtung B, in denen der jeweilige Impulskörper Bewegungsspiel aufweist und die miteinander und mit einer zur Rotationsachse C der Turbomaschine (vgl. Fig. 1) senkrechten Längsachse der Schaufel bzw. radialen Richtung R jeweils einen Winkel zwischen 85° und 95° einschließen, jeweils einander gegenüberliegende Wandungen auf, von denen exemplarisch in Fig. 2 die einander in der ersten Stoßrichtung A gegenüberliegenden Wandungen 12, 13 und in Fig. 3 die einander in der zweiten Stoßrichtung B gegenüberliegenden Wandungen 14, 15 der ersten Stoßkammern 10 mit Bezugszeichen identifiziert sind. Ein Abstand zwischen den in der ersten Stoßrichtung einander gegenüberliegende Wandungen und ein Abstand zwischen den in der zweiten Stoßrichtung einander gegenüberliegende Wandungen differiert bei der ersten, einer oder mehreren der zweiten, der dritten und/oder einer oder mehreren der vierten Stoßkammern um höchstens 5%.

Fig. 1 zeigt einen Teil des Verdichters der Gasturbine nach einem Aspekt der vorliegenden Erfindung in einem Meridianschnitt mit zwei Laufschaufeln 100, wie sie vorstehend mit Bezug auf Fig. 2, 3 erläutert wurden.

Der Verdichter weist eine in Durchströmungsrichtung (von links nach rechts in Fig. 1) vorderste (links in Fig. 1) Schaufelgitteranordnung bzw. eine in Durchströmungsrichtung vorderste Stufe S1 mit einem Laufgitter mit in Umfangsrichtung verteilten Laufschaufeln 100, eine in Durchströmungsrichtung hinterste (rechts in Fig. 1) Schaufelgitteranordnung bzw. eine in Durchströmungsrichtung hinterste Stufe S3 mit einem Laufgitter mit in Umfangsrichtung verteilten Laufschaufeln 100 und eine weitere Schaufelgitteranordnung bzw. Stufe S2 mit einem Laufgitter mit in Umfangsrichtung verteilten Laufschaufeln 200 auf, die in Durchströmungsrichtung zwischen der vordersten und der hintersten Schaufelgitteranordnung angeordnet ist.

Wie vorstehend mit Bezug auf Fig. 2, 3 erläutert, weisen wenigstens einige der Laufschaufeln 100 der vordersten Schaufelgitteranordnung S1 und wenigstens einige der Laufschaufeln 100 der hintersten Schaufelgitteranordnung S3 jeweils ein Impulskörpergehäuse 1.1, 1.2 mit mehreren Stoßkammern auf, in der jeweils ein Impulskörper mit Bewegungsspiel angeordnet ist (vgl. die vergrößerte Darstellung der Fig. 2, 3).

Hingegen weisen eine oder mehrere, insbesondere alle, Laufschaufel 200 der weiteren Schaufelgitteranordnung S2 keine Stoßkammer auf, in der ein Impulskörper mit Bewegungsspiel angeordnet ist.

Wie vorstehend erläutert, können der mit Beug auf Fig. 2, 3 erläuterte erste und/oder zweite Aspekt der vorliegenden Erfindung und der mit Beug auf Fig. 1 erläuterte dritte Aspekt der vorliegenden Erfindung miteinander kombiniert oder eigenständig verwirklicht sein. Die nachfolgenden Erläuterungen beziehen sich daher allgemein auf eine(n) oder mehrere der vorstehend erläuterten Aspekte bzw. Ausführungen.

Wie insbesondere am Beispiel der ersten Stoßkammer 10 in Fig. 2, 3 erkennbar, schließen die Wandungen der Stoßkammern (12, 13, 14 und 15 für die erste Stoßkammer 10) mit der Längsachse der Schaufel bzw. radialen Richtung R einen Winkel von höchstens 5° ein.

Wie insbesondere am Beispiel der ersten, zweiten und dritten Stoßkammern 10, 20 bzw. 30 in Fig. 2, 3 erkennbar, ist eine radial innere (unten in Fig. 2, 3) und eine radial äußere (oben in Fig. 2, 3) Wandung der Stoßkammern, die mit der Längsachse R einen Winkel von wenigstens 75° und höchstens 105° einschließt, eben bzw. plan.

In einer Ausführung weist wenigstens eine der Stoßkammern einen kreisförmigen oder polygonalen, insbesondere vier-, fünf- oder sechseckigen, Querschnitt senkrecht zur Längsachse R auf, was in den beiden Schnitten der Fig. 2, 3 identisch erscheint.

Die in den Stoßkammern angeordneten Impulskörper (11, 21, 31 für die erste, zweiten und dritte Stoßkammer(n)) weisen jeweils eine Masse von wenigstens 0,01 g und höchstens 0,075 g auf. Zusätzlich beträgt eine Dichte der Impulskörper höchstens 70% einer Dichte eines Schaufelblatts 110 der Schaufel (vgl. Fig. 2).

Die mehrteiligen Impulskörpergehäuse 1.1, 1.2 sind separat hergestellt und mit einem Schaufelfuß 120 der jeweiligen Schaufel lösbar oder dauerhaft verbunden. In einer nicht dargestellten Abwandlung können zusätzlich oder alternativ Impulskörpergehäuse auch im Schaufelblatt 110 und/oder einem Deckband angeordnet sein.

In einer Ausführung ist wenigstens eines der Impulskörpergehäuse in einer vorderkantennäheren Hälfte (links in Fig. 1, 2) und/oder wenigstens eines der Impulskörpergehäuse in einer hinterkantennäheren Hälfte (rechts in Fig. 1, 2) der jeweiligen Schaufel angeordnet. In den Fig. 1-3 sind die Impulskörpergehäuse 1.1, 1.2 vergrößert dargestellt und scheinen daher von der vorderkantennäheren in die hinterkantennähere Hälfte zu ragen, obwohl sie bei maßstabsgetreuer Darstellung vollständig in der vorderkantennäheren Hälfte angeordnet sind.

Obwohl in der vorhergehenden Beschreibung exemplarische Ausführungen erläutert wurden, sei darauf hingewiesen, dass eine Vielzahl von Abwandlungen möglich ist.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 1.1, 1.2: mehrteiliges Impulskörpergehäuse
- 10: erste Stoßkammer
- 11, 21, 31: Impulskörper
- 12-14: Wandung
- 20: zweite Stoßkammer
- 30: dritte Stoßkammer
- 100, 200: Laufschaufel
- 110: Schaufelblatt
- 120: Schaufelfuß
- A: erste Matrix-/Stoßrichtung
- B: zweite Matrix-/Stoßrichtung
- R: Schaufellängsachse/Radialrichtung
- S1: vorderste Schaufelgitteranordnung/Stufe
- S2: weitere Schaufelgitteranordnung/Stufe
- S3: hinterste Schaufelgitteranordnung/Stufe
- C: Rotationsachse

## Patentansprüche

1. Schaufel (100) für eine Turbomaschine, mit wenigstens einem Impulskörpergehäuse (1.1, 1.2) mit einer ersten Stoßkammer (10), in der ein Impulskörper (11) mit Bewegungsspiel angeordnet ist, um Resonanzen der Schaufel im Wesentlichen nicht dissipativ durch Reibung, sondern durch Verstimmung der Eigenfrequenzen mittels impulsartigen Stoßkontakten zu reduzieren, wobei das Impulskörpergehäuse wenigstens eine zweite Stoßkammer (20), die mit der ersten Stoßkammer in einer ersten Matrixrichtung (A) fluchtet und in der ein Impulskörper (21) mit Bewegungsspiel angeordnet ist, und wenigstens eine dritte Stoßkammer (30) aufweist, die mit der ersten Stoßkammer in einer zweiten Matrixrichtung (B) quer zu der ersten Matrixrichtung fluchtet und in der ein Impulskörper (31) mit Bewegungsspiel angeordnet ist; und/oder wenigstens eine der Stoßkammem (10, 20, 30) bzw. wenigstens eine Stoßkammer (10, 20, 30) in wenigstens einer ersten und einer zweiten Stoßrichtung (A, B), die miteinander einen Winkel von wenigstens 30° und höchstens 150° und mit einer zur Rotationsachse (C) der Turbomaschine senkrechten Längsachse (R), bzw. der Radialrichtung (R), der Schaufel jeweils einen Winkel von wenigstens 75° und höchstens 105° einschließen, jeweils einander gegenüberliegende Wandungen (12-14) aufweist, wobei ein Abstand zwischen den in der ersten Stoßrichtung (A) einander gegenüberliegenden Wandungen (12, 13) gegenüber einem Abstand zwischen den in der zweiten Stoßrichtung (B) einander gegenüberliegenden Wandungen (14, 15) um höchstens 10% differiert.

2. Schaufel nach dem vorhergehenden Anspruch, **dadurch gekennzeichnet, dass** wenigstens eine Wandung (12-14) wenigstens einer der Stoßkammern (10, 20, 30) mit der Längsachse (R) der Schaufel einen Winkel von höchstens 15° einschließt.

3. Schaufel nach einem der vorhergehenden Ansprüche, **dadurch gekennzeichnet, dass** wenigstens eine Wandung (12-14) wenigstens einer der Stoßkammern (10, 20, 30) eben ist.

4. Schaufel nach einem der vorhergehenden Ansprüche, **dadurch gekennzeichnet, dass** wenigstens eine der Stoßkammern (10, 20, 30) wenigstens einen kreisförmigen oder polygonalen, insbesondere vier-, fünf- oder sechseckigen, Querschnitt aufweist.

5. Schaufel nach einem der vorhergehenden Ansprüche, **dadurch gekennzeichnet, dass** eine Masse wenigstens eines der Impulskörper (11, 21, 31) wenigstens 0,01 g und/oder höchstens 0,075 g beträgt.

6. Schaufel nach einem der vorhergehenden Ansprüche, **dadurch gekennzeichnet, dass** eine Dichte wenigstens eines der Impulskörper (11, 21, 31) höchstens 80% einer Dichte eines Schaufelblatts (110) der Schaufel beträgt.

7. Schaufel nach einem der vorhergehenden Ansprüche, **dadurch gekennzeichnet, dass** das Impulskörpergehäuse (1.1, 1.2) separat, insbesondere mehrteilig, hergestellt und mit einem Grundkörper, insbesondere einem Fuß (120), Deckband oder Schaufelblatt, der Schaufel lösbar oder dauerhaft verbunden ist.

8. Schaufel nach einem der vorhergehenden Ansprüche, **dadurch gekennzeichnet, dass** wenigstens eines der Impulskörpergehäuse (1.1, 1.2) in einer vorderkantennäheren Hälfte der Schaufel und/oder wenigstens eines der Impulskörpergehäuse in einer hinterkantennäheren Hälfte der Schaufel angeordnet ist.

9. Axialturbomaschine, insbesondere Verdichter oder Turbine einer Gasturbine, mit einer in Durchströmungsrichtung vordersten Schaufelgitteranordnung (S1), einer in Durchströmungsrichtung hintersten Schaufelgitteranordnung (S3) und wenigstens einer weiteren Schaufelgitteranordnung (S2), die in Durchströmungsrichtung zwischen der vordersten und der hintersten Schaufelgitteranordnung angeordnet ist, wobei wenigstens eine Leit- und/oder Laufschaufel (100) der vordersten Schaufelgitteranordnung und wenigstens eine Leit- und/oder Laufschaufel (100) der hintersten Schaufelgitteranordnung jeweils wenigstens ein Impulskörpergehäuse (1.1, 1.2) mit wenigstens einer Stoßkammer (10, 20, 30) aufweist, in der ein Impulskörper (11, 21, 31) mit Bewegungsspiel angeordnet ist, wobei die wenigstens eine Leit- und/oder Laufschaufel eine Schaufel nach einem der vorhergehenden Ansprüche ist, und wobei wenigstens eine Leit- und/oder Laufschaufel (200) der weiteren Schaufelgitteranordnung keine Stoßkammer aufweist, in der ein Impulskörper mit Bewegungsspiel angeordnet ist.

10. Axialturbomaschine nach dem vorhergehenden Anspruch, **dadurch gekennzeichnet, dass** wenigstens eine Wandung (12-14) wenigstens einer der Stoßkammern (10, 20, 30) mit einer zur Rotationsachse (C) der Turbomaschine senkrechten Längsachse (R) der Schaufel (100) einen Winkel von höchstens 15° einschließt und/oder eben ist.

11. Axialturbomaschine nach einem der Ansprüche 9-10, **dadurch gekennzeichnet, dass** wenigstens eine der Stoßkammern (10, 20, 30) wenigstens einen kreisförmigen oder polygonalen, insbesondere vier-, fünf- oder sechseckigen, Querschnitt aufweist.

12. Axialturbomaschine nach einem der Ansprüche 9-11, **dadurch gekennzeichnet, dass** eine Masse wenigstens eines der Impulskörper (11, 21, 31) wenigstens 0,01 g und/oder höchstens 0,075 g beträgt.

13. Axialturbomaschine nach einem der Ansprüche 9-12, **dadurch gekennzeichnet, dass** eine Dichte wenigstens eines der Impulskörper (11, 21, 31) höchstens 80% einer Dichte eines Schaufelblatts (110) der Schaufel (100) beträgt, in der der Impulskörper angeordnet ist.

14. Axialturbomaschine nach einem der Ansprüche 9-13, **dadurch gekennzeichnet, dass** das Impulskörpergehäuse (1.1, 1.2) separat, insbesondere mehrteilig, hergestellt und mit einem Grundkörper, insbesondere einem Fuß (120), Deckband oder Schaufelblatt, der Schaufel (100) lösbar oder dauerhaft verbunden ist, in der der Impulskörper angeordnet ist.

15. Axialturbomaschine nach einem der Ansprüche 9-14, **dadurch gekennzeichnet, dass** wenigstens eines der Impulskörpergehäuse (1.1, 1.2) in einer vorderkantennäheren Hälfte der Schaufel (100) und/oder wenigstens eines der Impulskörpergehäuse in einer hinterkantennäheren Hälfte der Schaufel angeordnet ist, in der das Impulskörpergehäuse angeordnet ist.

## Claims

1. Blade (100) for a turbomachine, comprising at least one impulse body housing (1.1, 1.2) which has a first impact chamber (10), in which an impulse body (11) is arranged with movement clearance, in order to substantially reduce resonances of the blade, not dissipatively by means of friction, but by tuning out the natural frequencies by means of impulse-like impact contacts, wherein the impulse body housing has at least one second impact chamber (20) which is aligned with the first impact chamber in a first matrix direction (A) and in which an impulse body (21) is arranged with movement clearance, and at least one third impact chamber (30) which is aligned with the first impact chamber in a second matrix direction (B) which is transverse to the first matrix direction, and in which third impact chamber an impulse body (31) is arranged with movement clearance; and/or at least one of the impact chambers (10, 20, 30) or at least one impact chamber (10, 20, 30) in each case has mutually facing walls (12-14) in at least one first and one second impulse direction (A, B), which together enclose an angle of at least 30° and at most 150°, and which, together with a longitudinal axis (R), or the radial direction (R), of the blade, perpendicular to the axis of rotation (C) of the turbomachine, in each case enclose an angle of at least 75° and at most 105°, wherein a distance between the mutually facing walls (12, 13) in the first impulse direction (A) differs by at most 10% from a distance between the mutually facing walls (14, 15) in the second impulse direction (B).

2. Blade according to the preceding claim, **characterized in that** at least one wall (12-14) of at least one of the impact chambers (10, 20, 30) encloses an angle of at most 15° with the longitudinal axis (R) of the blade.

3. Blade according to either of the preceding claims, **characterized in that** at least one wall (12-14) of at least one of the impact chambers (10, 20, 30) is planar.

4. Blade according to any of the preceding claims, **characterized in that** at least one of the impact chambers (10, 20, 30) has at least one circular or polygonal cross section, in particular quadrangular, pentagonal or hexagonal.

5. Blade according to any of the preceding claims, **characterized in that** a mass of at least one of the impulse bodies (11, 21, 31) is at least 0.01 g and/or at most 0.075 g.

6. Blade according to any of the preceding claims, **characterized in that** a density of at least one of the impulse bodies (11, 21, 31) is at most 80% of a density of an airfoil (110) of the blade.

7. Blade according to any of the preceding claims, **characterized in that** the impulse body housing (1.1, 1.2) is produced separately, in particular in multiple parts, and is detachably or permanently connected to a main body of the blade, in particular a root (120), shroud or airfoil.

8. Blade according to any of the preceding claims, **characterized in that** at least one of the impulse body housings (1.1, 1.2) is arranged in a half of the blade which is closer to the leading edge, and/or at least one of the impulse body housings is arranged in a half of the blade which is closer to the trailing edge.

9. Axial turbomachine, in particular a compressor or turbine of a gas turbine, having a blade cascade arrangement (S1) at the frontmost location in the throughflow direction, a blade cascade arrangement (S3) at the rearmost location in the throughflow direction, and at least one further blade cascade arrangement (S2) which is arranged between the frontmost and the rearmost blade cascade arrangement in the throughflow direction, wherein at least one guide vane and/or rotor blade (100) of the frontmost blade cascade arrangement and at least one guide vane and/or rotor blade (100) of the rearmost blade cascade arrangement each have at least one impulse body housing (1.1, 1.2) comprising at least one impact chamber (10, 20, 30) in which an impulse body (11, 21, 31) is arranged with movement clearance wherein the at least one guide vane and/or rotor blade is a blade according to any of the preceding claims, and wherein at least one guide vane and/or rotor blade (200) of the further blade cascade arrangement does not have a impact chamber in which an impulse body with movement clearance is arranged.

10. Axial turbomachine according to the preceding claim, **characterized in that** at least one wall (12-14) of at least one of the impact chambers (10, 20, 30), together with a longitudinal axis (R) of the blade (100) perpendicular to the axis of rotation (C) of the turbomachine, encloses an angle of at most 15° and/or is planar.

11. Axial turbomachine according to either claim 9 or claim 10, **characterized in that** at least one of the impact chambers (10, 20, 30) has at least one circular or polygonal, in particular quadrangular, pentagonal or hexagonal, cross section.

12. Axial turbomachine according to any of claims 9-11, **characterized in that** a mass of at least one of the impulse bodies (11, 21, 31) is at least 0.01 g and/or at most 0.075 g.

13. Axial turbomachine according to any of claims 9-12, **characterized in that** a density of at least one of the impulse bodies (11, 21, 31) is at most 80% of a density of an airfoil (110) of the blade (100) in which the impulse body is arranged.

14. Axial turbomachine according to any of claims 9-13, **characterized in that** the impulse body housing (1.1, 1.2) is produced separately, in particular in multiple parts, and is detachably or permanently connected to a main body, in particular a root (120), shroud or airfoil, of the blade (100) in which the impulse body is arranged.

15. Axial turbomachine according to any of claims 9-14, **characterized in that** at least one of the impulse body housings (1.1, 1.2) is arranged in a half of the blade (100) which is closer to the leading edge and/or at least one of the impulse body housings is arranged in a half of the blade which is closer to the trailing edge of the blade in which the impulse body housing is arranged.

## Revendications

1. Aube (100) de turbomachine, comprenant au moins un boîtier de corps d'impulsion (1.1, 1.2) comportant une première chambre périphérique (10), dans laquelle est disposé un corps d'impulsion (11) comportant un jeu de mouvement, afin de réduire les résonances de l'aube de manière sensiblement non dissipative par friction, mais plutôt par désaccord des fréquences propres au moyen de contacts d'aboutement par impulsions, le boîtier de corps d'impulsion comprenant au moins une deuxième chambre périphérique (20), qui est alignée avec la première chambre périphérique dans une première direction matricielle (A), et dans laquelle est disposé un corps d'impulsion (21) comportant un jeu de mouvement, et au moins une troisième chambre périphérique (30), qui est alignée avec la première chambre périphérique dans une seconde direction matricielle (B) perpendiculairement à la première direction matricielle, et dans laquelle est disposé un corps d'impulsion (31) comportant un jeu de mouvement ; et/ou au moins l'une des chambres périphériques (10, 20, 30) ou au moins l'une des chambres périphériques (10, 20, 30) présente, dans au moins une première et une seconde directions (A, B) qui comprennent, l'une par rapport à l'autre, un angle d'au moins 30 ° et d'au plus 150 ° et avec un axe longitudinal (R) perpendiculaire à l'axe de rotation (C) de la turbomachine, ou à la direction radiale (R), de l'aube, respectivement un angle d'au moins 75 ° et d'au plus 105 °, des parois (12-14) situées respectivement l'une par rapport à l'autre, une distance entre les parois (12, 13) situées l'une par rapport à l'autre dans la première direction périphérique (A) différant d'au plus 10 % par rapport à une distance entre les parois (14, 15) situées l'une par rapport à l'autre dans seconde direction périphérique (B).

2. Aube selon la revendication précédente, **caractérisée en ce qu'**au moins une paroi (12-14) d'au moins l'une des chambres périphériques (10, 20, 30) forme un angle d'au plus 15 ° avec l'axe longitudinal (R) de l'aube.

3. Aube selon l'une des revendications précédentes, **caractérisée en ce qu'**au moins une paroi (12-14) d'au moins l'une des chambres périphériques (10, 20, 30) est plane.

4. Aube selon l'une des revendications précédentes, **caractérisée en ce qu'**au moins l'une des chambres périphériques (10, 20, 30) présente au moins une section transversale circulaire ou polygonale, en particulier quadrangulaire, pentagonale ou hexagonale.

5. Aube selon l'une des revendications précédentes, **caractérisée en ce qu'**une masse d'au moins l'un des corps d'impulsion (11, 21, 31) est d'au moins 0,01 g et/ou d'au plus 0,075 g.

6. Aube selon l'une des revendications précédentes, **caractérisée en ce qu'**une densité d'au moins l'un des corps d'impulsion (11, 21, 31) représente au plus 80 % d'une densité d'un profil (110) de l'aube.

7. Aube selon l'une des revendications précédentes, **caractérisée en ce que** le boîtier de corps d'impulsion (1.1, 1.2) est produit séparément, en particulier en plusieurs parties, et est relié de manière amovible ou permanente à un corps de base, en particulier à un pied (120), à une bande de recouvrement o- du profil, de l'aube.

8. Aube selon l'une des revendications précédentes, **caractérisée en ce qu'**au moins l'un des boîtiers de corps d'impulsion (1.1, 1.2) est disposé dans une moitié plus proche du bord avant de l'aube et/ou au moins l'un des boîtiers de corps d'impulsion est disposé dans une moitié plus proche du bord arrière de l'aube.

9. Turbomachine axiale, en particulier compresseur ou turbine d'une turbine à gaz, comprenant un agencement de grille d'aubes (S1) le plus en avant dans la direction d'écoulement, un agencement de grille d'aubes (S3) le plus en arrière dans la direction d'écoulement, et au moins un autre agencement de grille d'aubes (S2) qui est disposé dans la direction d'écoulement entre l'agencement de grille d'aubes le plus en avant et le plus en arrière, au moins une aube directrice et/ou une aube mobile (100) de l'agencement de grille d'aubes le plus en avant et au moins une aube directrice et/ou une aube mobile (100) de l'agencement de grille d'aubes le plus en arrière présentant respectivement au moins un boîtier de corps d'impulsion (1.1, 1.2) comportant au moins une chambre périphérique (10, 20, 30), dans laquelle est disposé un corps d'impulsion (11, 21, 31) comportant un jeu de mouvement, l'au moins une aube directrice et/ou mobile étant une aube selon l'une des revendications précédentes, et une aube directrice et/ou mobile (200) de l'autre agencement de grille d'aubes ne présentant aucune chambre périphérique, dans laquelle est disposé un corps d'impulsion comportant un jeu de mouvement.

10. Turbomachine axiale selon la revendication précédente, **caractérisée en ce qu'**au moins une paroi (12-14) d'au moins l'une des chambres périphériques (10, 20, 30) forme, avec un axe longitudinal (R) de l'aube (100) perpendiculaire à l'axe de rotation (C) de la turbomachine, un angle d'au plus 15 ° et/ou est plane.

11. Turbomachine axiale selon l'une des revendications 9-10, **caractérisée en ce qu'**au moins l'une des chambres périphériques (10, 20, 30) présente au moins une section transversale circulaire ou polygonale, en particulier quadrangulaire, pentagonale ou hexagonale.

12. Turbomachine axiale selon l'une des revendications 9-11, **caractérisée en ce qu'**une masse d'au moins l'un des corps d'impulsion (11, 21, 31) est d'au moins 0,01 g et/ou d'au plus 0,075 g.

13. Turbomachine axiale selon l'une des revendications 9-12, **caractérisée en ce qu'**une densité d'au moins l'un des corps d'impulsion (11, 21, 31) représente au plus 80 % d'une densité d'un profil (110) de l'aube (100), dans laquelle est disposé le corps d'impulsion.

14. Turbomachine axiale selon l'une des revendications 9 à 13, **caractérisée en ce que** le boîtier de corps d'impulsion (1.1, 1.2) est produit séparément, en particulier en plusieurs parties, et est relié de manière amovible ou permanente à un corps de base, en particulier à un pied (120), à une bande de recouvrement o- du profil, de l'aube (100), dans laquelle est disposé le corps d'impulsion.

15. Turbomachine axiale selon l'une des revendications 9 à 14, **caractérisée en ce qu'**au moins l'un des boîtiers de corps d'impulsion (1.1, 1.2) est disposé dans une moitié plus proche du bord avant de l'aube (100) et/ou au moins l'un des boîtiers de corps d'impulsion est disposé dans une moitié plus proche du bord arrière de l'aube, dans laquelle est disposé le boîtier du corps d'impulsion.
